# FASCICULE DE BREVET EUROPEEN

(11) **EP 2 435 300 B1**
(45) Date de publication et mention de la délivrance du brevet: **23.03.2016**
(21) Numéro de dépôt: 10728839.1
(22) Date de dépôt: 28.05.2010
(51) Int. Cl.: B64C 1/18, F16F 1/38, B64C 1/06

(54) **AERONEF COMPRENANT DES TRAVERSES DE SUPPORT DE PLANCHER ET PALIERS COMPRENANT UN MATERIAU ELASTOMERE ET RELIANT LA TRAVERSE AU SUPPORT.**
FLUGZEUG MIT STÜTZENDEN BODENSTREBEN UND LAGERN MIT ELASTOMERISCHEM MATERIAL ZUR VERBINDUNG DER BODENSTREBE MIT DEM TRÄGER
AIRCRAFT INCLUDING SUPPORTING FLOOR BEAMS AND BEARINGS COMPRISING AN ELASTOMERIC MATERIAL AND CONNECTING THE FLOOR BEAM TO THE MOUNTING

(30) Priorité: 28.05.2009 FR 0953514
(43) Date de publication de la demande: 04.04.2012
(73) Titulaire: Airbus Operations, 31000 Toulouse (FR)
(72) Inventeur: GALLANT, Guillaume, F-31480 Lareole (FR); DELAHAYE, Romain, F-31770 Colomiers (FR)
(74) Mandataire: Potdevin, Emmanuel Eric
(86) Numéro de dépôt international: PCT/FR2010/051032
(87) Numéro de publication internationale: WO 2010/136734

(56) Documents cités:
- EP-A1- 1 614 624
- EP-A2- 0 101 235
- WO-A1-02/21012
- WO-A1-2007/033640
- FR-A1- 2 915 173

## Description

L'invention concerne la structure des aéronefs.

On utilise dans la présente demande le repère orthogonal classique X, Y, Z dans lequel les directions X et Y sont horizontales tandis que la direction Z est verticale. La direction X est la direction longitudinale du fuselage de l'aéronef tandis que la direction Y est sa direction transversale.

Il est connu dans un avion de supporter le plancher du fuselage au moyen de traverses s'étendant suivant la direction Y. Le fuselage comprend des cadres de forme générale circulaire, plans et espacés les uns des autres le long de la direction X. Chaque traverse est fixée par ses extrémités à l'un des cadres. Elle repose également sur des piquets verticaux eux-mêmes fixés aux parties inférieures des cadres. On réalise ainsi un assemblage rigide et robuste.

Un tel agencement présente toutefois des inconvénients. En effet, les charges supportées par le plancher génèrent, à la jonction des traverses avec les cadres, des moments de flexion sur ces derniers autour de l'axe X. Les contraintes apparaissant dans la structure de l'avion en vol génèrent également au même endroit un effort tranchant suivant la direction Y. Ces sollicitations se traduisent respectivement par un cisaillement dans la pièce assurant la liaison entre la traverse et le cadre, et par un matage ou écrasement de cette pièce d'un côté. Ces différentes sollicitations obligent à renforcer la pièce en question, ce qui pénalise la masse et le coût de réalisation de l'avion.

Le document EP-1 614 624, qui montre toutes les caractéristiques du préambule de la revendication 1, est considéré comme étant l'état de la technique le plus proche.

Un but de l'invention est d'améliorer à cet égard le support du plancher de l'aéronef.

A cet effet, on prévoit selon l'invention un aéronef qui comprend :
- au moins une traverse de plancher ;
- au moins un support portant la traverse ; et
- au moins un palier comprenant au moins un matériau élastomère et reliant la traverse au support.

On entend ici que le matériau du palier est plus souple que celui ou ceux formant la traverse et le support.

Ainsi, la souplesse du matériau rend le palier déformable, ce qui rend mobile la traverse par rapport au support. Cette mobilité réduit la transmission des moments autour de l'axe X ainsi que des efforts tranchants suivant la direction Y. De plus, c'est le matériau souple du palier qui subit les contraintes de flexion et de cisaillement et les efforts d'écrasement.

De plus, le palier ne risque pas de se gripper avec le temps. En effet, un palier ne comprenant que des pièces mobiles et rigides pourrait se gripper au fur et à mesure de l'usure des pièces et de l'introduction de saletés entre elles. Et ce grippage engendrerait à la longue du bruit au niveau de la liaison entre la traverse et le support, ce qui serait désagréable pour les occupants de l'aéronef. En outre, ce grippage engendrerait un risque que les pièces mobiles se bloquent puis se rompent prématurément.

En outre, grâce au matériau souple, quelle que soit la forme du palier, la liaison entre les pièces s'apparente à une liaison rotule. Et ce, même si le palier n'est pas monté mobile par rapport aux autres pièces. Le palier peut donc encaisser des contraintes de cisaillement suivant l'une quelconque des directions X, Y et Z et des efforts de matages dans ces trois directions. On soulage donc les autres pièces de toutes ces sollicitations.

Il importe aussi de noter que ces avantages persistent même si la traverse et/ou le support sont déformés parce qu'ils sont eux-mêmes sollicités par ailleurs.

Les propriétés de mobilité relative de la traverse et du support et l'aptitude du palier à encaisser des sollicitations seront plus ou moins grandes selon le type de matériau souple constituant le palier.

Au surplus, l'interposition d'un tel palier limite la transmission des vibrations de l'une à l'autre des pièces, en assurant un filtrage des fréquences des vibrations. Le confort à bord de l'aéronef en termes de vibrations et de bruit est donc amélioré.

Le matériau est élastique.

Ainsi, les pièces reprennent leur position d'origine après qu'elles se soient déplacées et/ou déformées relativement, notamment lorsqu'elles ne sont plus sollicitées.

Le matériau est en élastomère.

Avantageusement, le matériau souple étant un premier matériau, le palier comprend au moins un insert en un deuxième matériau interposé entre deux couches du premier matériau, le deuxième matériau étant plus rigide que le premier matériau.

Un tel insert permet de renforcer le palier et d'ajuster ses propriétés mécaniques en fonction du matériau souple choisi au départ.

Avantageusement, le ou chaque insert s'étend sur une partie seulement d'un tour autour d'un axe principal du palier.

Ainsi, on peut doter le palier de propriétés différentes dans certaines zones ou dans certaines directions radiales, pour mieux l'adapter aux sollicitations prévues.

Plus généralement, on peut prévoir que le palier est configuré de sorte qu'il présente des souplesses, telles que des élasticités, différentes suivant au moins deux directions radiales à un axe principal du palier.

Avantageusement, le palier présente une forme annulaire, notamment cylindrique.

Une telle forme est particulièrement propice pour que le palier encaisse les moments de flexion s'exerçant autour de l'axe défini par la forme annulaire.

De préférence, le palier présente un axe défini par la forme annulaire, qui s'étend suivant une direction horizontale perpendiculaire à une direction générale de la traverse.

Ainsi, le palier est particulièrement adapté à l'absorption des moments de flexion autour de l'axe X.

Avantageusement, l'aéronef comprend deux bagues concentriques entre lesquelles est interposé le palier et reliées respectivement à la traverse et au support, de préférence l'une des deux bagues formant un logement de réception du palier.

Avantageusement, au moins l'un parmi le support et la traverse comprend une paroi verticale parallèle à une direction générale de la traverse et par laquelle il est replié à l'autre parmi le support et la traverse.

Cet agencement permet un montage simple de l'ensemble, notamment lorsqu'on souhaite privilégier une absorption des moments autour de l'axe X.

De préférence, le support et la traverse comprennent chacun une paroi de ce type, les deux parois présentant des faces de liaison au palier orientées dans une même direction.

Cet agencement facilite encore la réalisation du montage.

Dans un mode de réalisation, le support comprend un cadre relié à la traverse à au moins une extrémité de la traverse, et de préférence à ses deux extrémités.

Dans un autre mode de réalisation compatible avec le précédent, le support comprend au moins un piquet relié à la traverse à distance des extrémités de la traverse.

De préférence, le palier est agencé pour se ruiner lorsqu'une intensité d'une sollicitation sur le palier suivant une direction longitudinale de la traverse dépasse un seuil prédéterminé, dit dynamique, ce seuil étant supérieur à un seuil, dit statique, prédéterminé en tant que maximum pour cette intensité en circonstances normales d'utilisation de l'aéronef.

En cas de crash, cette ruine se traduit par une absorption d'énergie préalable au niveau du palier qui retarde la déformation de la section du fuselage et améliore donc le comportement de la structure dans une telle circonstance.

D'autres caractéristiques et avantages de l'invention apparaîtront encore dans la description suivante de plusieurs modes de réalisation donnés à titre d'exemples non limitatifs en référence aux dessins annexés sur lesquels :
- la figure 1 est une vue de côté d'un avion selon l'invention ;
- la figure 2 est une vue en perspective d'une partie de la structure du fuselage de l'avion de la figure 1 ;
- la figure 3 est une vue de face d'un détail D de la structure de la figure 2 ;
- la figure 4 est une vue en perspective des éléments de la figure 3 ;
- la figure 5 est une vue en coupe suivant le plan V-V des éléments de la figure 3 ; et
- les figures 6 à 8 sont des vues analogues à la figure 3 illustrant d'autres mode de réalisation.

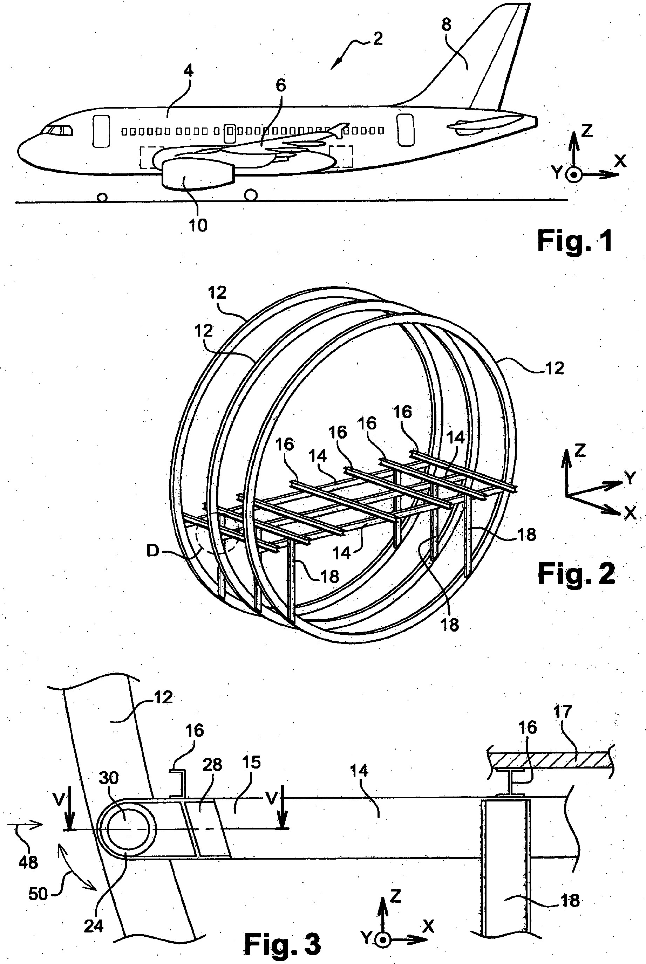

En référence à la figure 1, l'aéronef 2 selon l'invention est en l'espèce un aérodyne et dans le présent exemple un avion. Il comprend un fuselage 4, deux ailes 6, un empennage 8 et des moteurs 10, ici au nombre de deux.

Le fuselage 4 présente sur la plus grande partie de sa longueur une forme cylindrique à section transversale verticale circulaire. L'axe longitudinal du fuselage correspondant à l'axe du cylindre est parallèle à la direction X.

La structure du fuselage comprend notamment des cadres 12 visibles à la figure 2. Les cadres sont identiques entre eux. Ils présentent chacun une forme générale circulaire, par exemple trilobée, plane, à symétrie de révolution autour de l'axe central longitudinal du fuselage. Les cadres s'étendent dans des plans successifs perpendiculaires à la direction X. Ils sont coaxiaux, en regard les uns des autres et espacés les uns des autres.

La structure comprend également des traverses horizontales 14 formées par des poutres profilées rectilignes s'étendant suivant la direction Y. Les traverses s'étendent dans un même plan horizontal, à distance les unes des autres et en regard les unes des autres.

La structure comprend des rails 16 rectilignes et parallèles à la direction X. Les rails sont distants les uns des autres et reposent sur les traverses, chaque rail reposant sur plusieurs des traverses 14. L'aéronef comprend un plancher 17 supporté par les rails 16. Par exemple, des sièges de passager, non-illustrés, sont fixés aux rails 16 à traverse le plancher 17.

La structure comprend en outre des piquets verticaux rectilignes profilés 18. A chaque traverse 14 sont associés en propre deux piquets 18 dont une extrémité supérieure est fixée à la traverse tandis qu'une extrémité inférieure est fixée au cadre 12 supportant déjà les extrémités de la traverse. Chaque piquet est relié à la traverse à distance des extrémités de la traverse.

Dans le présent mode de réalisation, la structure comprend, pour chaque traverse, à chaque extrémité 15 de la traverse, un palier 20 en matériau souple reliant la traverse 14 au cadre 12. Le matériau du palier est mou et déformable et, dans le présent exemple, élastique. Ce matériau est plus souple, plus élastique, plus déformable et plus mou que chacun des matériaux formant la traverse 14 et le cadre 12. Ces derniers sont ici en métal. Le matériau du palier est ici un élastomère, par exemple de rigidité comprise entre 10 kN/mm et 150 kN/mm. On choisira de préférence cette rigidité en fonction de la géométrie du palier.

Le palier 20 présente ici une forme générale annulaire cylindrique définissant un axe principal 22 parallèle à la direction X. Il présente en l'espèce une forme à symétrie de révolution autour de l'axe 22. La section courante du palier dans un plan radial à l'axe 22 a une forme générale en "U", les extrémités fibres des branches du "U" étant dirigées à l'opposé de l'axe 22.

La structure comprend pour chaque palier 20 une bague interne 24 et une bague externe 26, cette dernière étant définie par une pièce de maintien 28.

La bague interne 24 présente une forme générale annulaire cylindrique à symétrie de révolution d'axe 22. Sa section courante présente elle aussi une forme générale en "U" avec les extrémités libres des branches du "U" orientées en direction opposée à l'axe 22. Cette section définit ainsi une gorge périphérique de la bague 24 qui reçoit le palier 20. La bague 24 comprend en outre une paroi ou flasque 30 de forme plane et obturant l'une des faces de la bague. Au moyen de ce flasque 30, la bague 24 est fixée rigidement à une paroi 32 du cadre 12, cette paroi 32 étant elle-même plane et perpendiculaire à la direction X.

Chaque cadre 12 comprend en outre deux parois cylindriques interne 34 et externe 36 s'étendant à partir des bords de la paroi 32 respectivement vers l'arrière et vers l'avant de l'aéronef.

Le flasque 30 est rigidement fixé à la paroi 32 avec laquelle il réalise un contact surface contre surface. Cette fixation a lieu par exemple au moyen de rivets non représentés, engagés dans des orifices du cadre et de la bague.

La bague externe 26 présente elle aussi une forme annulaire cylindrique à symétrie de résolution autour de l'axe 22. La bague 26 présente sur sa section radiale courante un relief qui pénètre entre les branches du "U" formées par le palier 20. Ce dernier se trouve ainsi maintenu au fond de la gorge formée par la bague interne 24 grâce à l'appui réalisé en cette direction par le relief de la bague externe 26. Le palier réalise un contact surface contre surface d'une part avec la bague interne, d'autre part avec la bague externe, les interfaces de contact étant à chaque fois de forme cylindrique.

La pièce de maintien 28 formant la bague 26 se prolonge en direction du centre du fuselage et de la traverse. Elle comprend elle aussi un flasque 40 de forme plante perpendiculaire à la direction X par lequel elle vient en contact surface contre surface avec une paroi 42 de la traverse elle aussi perpendiculaire à la direction X. Le flasque 40 est fixé rigidement à la paroi 42, par exemple au moyen de rivets traversant ces deux parois.

Un espace e est ménagé suivant la direction Y entre la traverse 14 et le cadre 12. De même, un espace f est ménagé suivant la direction X entre la pièce de maintien 28 et le cadre 12, notamment en regard de la paroi 32.

La bague interne 24 et la pièce de maintien 28 sont fixées à des faces respectives du cadre et de la traverse parallèles entre elles et orientées dans la même direction, ici vers l'avant du fuselage.

On voit que, dans le présent exemple la bague interne 24 et le cadre 12 sont rigidement fixées au palier. De même, la pièce 28 et la traverse 14 sont rigidement fixées au palier. C'est seulement grâce à la déformation du matériau du palier que la traverse 14 peut se déplacer par rapport au cadre 12.

Grâce à cette possibilité de déformation, on réalise une liaison rotule entre la traverse 14 et le cadre 12 à chacune des extrémités de la traverse 14. Le palier 20 absorbe tout ou partie des sollicitations de matage 48 s'exerçant de l'une à l'autre de ces deux pièces suivant la direction Y. De même, il absorbe tout ou partie des sollicitations de cisaillement générées par les moments de flexion 50 autour de l'axe X et susceptibles d'apparaître entre ces deux pièces. S'agissant d'une liaison rotule, les sollicitations de cisaillement dues aux moments autour des axes Y. et Z sont également absorbées en tout ou partie. En raison du matériau qui constitue le palier, cette liaison ne présente pas d'usure substantielle avec le temps. La présence du matériau formant le palier 20 assure également un filtrage des fréquences et une réduction des vibrations et du bruit perçus à l'intérieur de la cabine de l'avion 2. Comme on le voit, en étant reçu dans le logement défini entre les deux bagues interne et externe, le palier 20 est en grande partie protégé des éléments extérieurs, en particulier des salissures.

Dans le présent exemple, il est prévu que l'un des rails 16 s'étend au-dessus de la jonction de la pièce de maintien 28 et de la traverse 14, en contact avec ces deux pièces. A cette fin, la pièce de maintien est renforcée par une nervure plane 44 s'étendant dans un plan perpendiculaire à la direction Y.

Dans les autres modes de réalisation qui suivent, les caractéristiques non décrites à nouveau sont réputées inchangées.

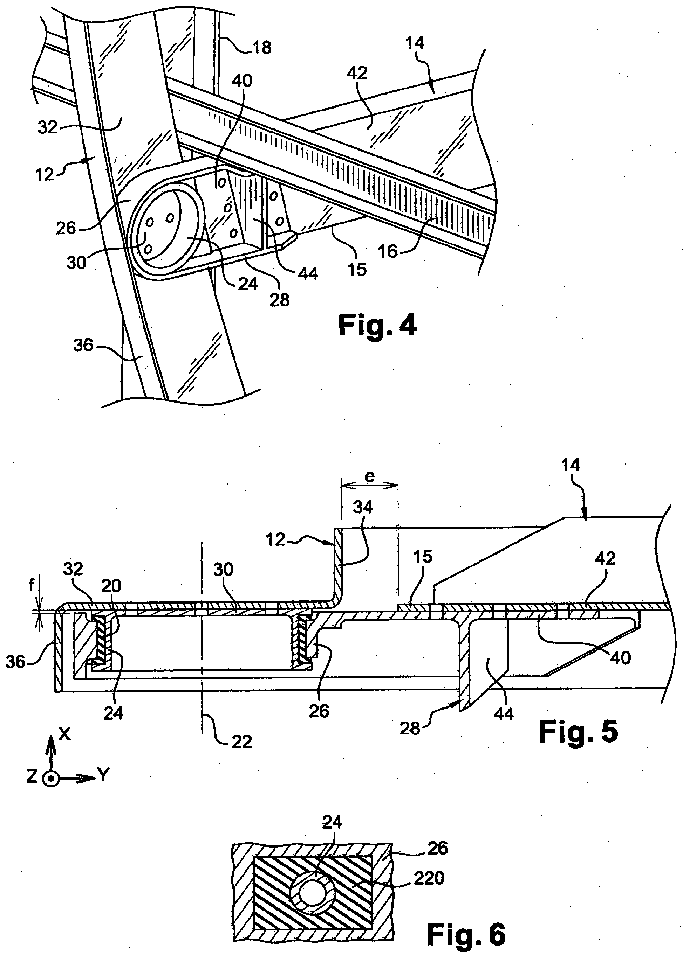

On a illustré à la figure 6 un deuxième mode de réalisation dans lequel seule la face interne du palier annulaire 220 présente en section une forme circulaire. Sa face externe présente en section une forme rectangulaire. La face interne de la bague externe 26 a donc elle aussi en section une forme rectangulaire tandis que la bague interne 24 présente une forme cylindrique à section circulaire. Cette combinaison de formes augmente le volume du palier entre les deux bagues et le rend encore plus propice à absorber des efforts de matage suivant la direction Y ainsi que suivant les autres directions. H peut également encore mieux absorber des sollicitations de cisaillement générées par des moments de flexion suivant chacun des trois axes X, Y et Z.

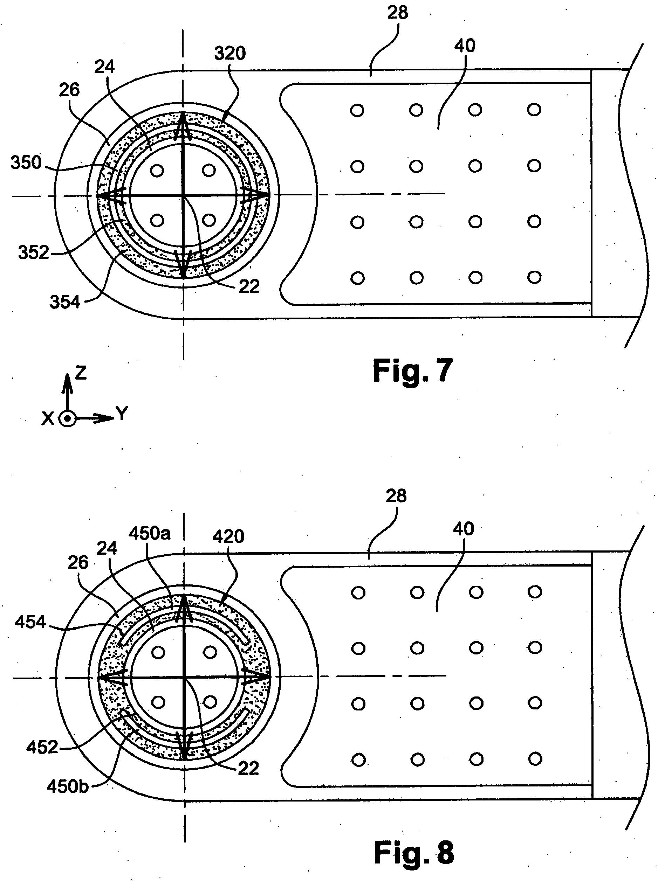

On a illustré un troisième mode de réalisation à la figure 7. Cette fois, le palier 320 situé entre les bagues interne 24 et externe 26 comprend en plus du matériau souple en élastomère un insert 350. Cet insert est ici en métal mais il pourrait aussi être réalisé en matériau composite, par exemple en une matière plastique renforcée par des fibres de verre. L'insert est ici noyé dans le matériau élastomère.

L'insert 350 a un forme cylindrique à section circulaire dans un plan parallèle au plan YZ. On distingue donc ici trois couches superposées dans cet ordre suivant la direction radiale à l'axe 22, entre les deux bagues :
- une couche interne 352 en matériau élastomère ;
- une couche médiane 350 formé par l'insert métallique ; et
- une couche externe 354 en matériau élastomère.

Chacune de ces trois couches s'étend sur un tour complet autour de l'axe 22 et a une épaisseur constante suivant la direction radiale lorsqu'on la parcourt autour de l'axe 22.

Dans ce mode de réalisation, les propriété du palier sont donc les mêmes dans toutes les directions radiales autour de l'axe. Notamment, la rigidité Kz du palier suivant la direction verticale a même valeur que sa rigidité Ky suivant la direction Y.

On a illustré un quatrième mode de réalisation à la figure 8. Cette fois, le palier 420 comprend deux inserts partiels 450a, 450b (en métal, voire en matériau composite) noyés dans le matériau élastomère. Chaque insert partiel a un forme de secteur de cylindre et s'étend sur une partie seulement d'un tour autour de l'axe 22, ici sur environ 100° autour de cet axe. Les deux inserts sont portés géométriquement par le même cylindre. L'un des inserts s'étend en partie supérieure et l'autre en partie inférieure. Chaque insert est symétrique de lui-même suivant un plan parallèle au plan XZ et symétrique de l'autre insert suivant un plan parallèle au plan XY.

En coupe suivant un plan parallèle au plan XZ, on distingue donc ici encore dans le palier trois couches superposées dans cet ordre suivant la direction radiale à l'axe 22, entre les deux bagues:
- une couche interne 452 en matériau élastomère ;
- une couche médiane formé par chaque insert 450a, 450b ; et
- une couche externe 454 en matériau élastomère.

Mais en coupe suivant un plan horizontal, on ne distingue donc cette fois dans le palier en direction radiale que deux couches, à savoir la couche interne 452 et la couche externe 454 en matériau élastomère, qui n'en forment qu'une seule.

Dans ce mode de réalisation, les propriété du palier ne sont donc pas les mêmes dans toutes les directions radiales autour de l'axe. Notamment, la rigidité Kz du palier suivant la direction verticale a une valeur supérieure à sa rigidité Ky suivant la direction Y.

On a réalisé des études approfondies sur le comportement au crash de différentes configurations d'aéronef, l'une d'elles étant conforme au premier mode de réalisation de l'invention.

Il en ressort que le concept à la fois articulé et offrant un degré de liberté en translation selon la direction horizontale radiale au fuselage permet d'absorber de l'énergie supplémentaire pendant la cinématique de rupture lors du crash. Ce concept d'articulation, grâce à la nature même de la jonction entre le cadre et la traverse, apporte donc une solution intéressante dans la recherche d'absorption d'énergie. En outre, tout laisse croire que ces avantages s'étendent plus généralement à l'invention, notamment aux autres modes décrits plus haut.

Plus précisément, on constate que l'invention permet de résoudre à la fois les deux problèmes suivants.Dans le domaine statique, en circonstances normales d'utilisation de l'avion, l'invention permet de diminuer les efforts dans le cadre tout en autorisant des déformations non permanentes de la structure. C'est pourquoi il est utile de disposer d'une élasticité en rotation autour de l'axe X et en translation dans la direction Y.

Dans le domaine dynamique, notamment en cas de crash, l'invention améliore la cinématique de rupture des différents éléments constitutifs de la structure du plancher en initiant des déplacements dans des directions offrant un potentiel d'absorption d'énergie supplémentaire. Cela se produit notamment suivant la direction Y qui est celle des traverses 14. On constate en effet que, lors d'une simulation de crash, les traverses de l'aéronef selon l'invention se fléchissent (leur centre s'abaisse par rapport à leurs extrémités qui se relèvent) davantage que sur un aéronef non conforme à l'invention. De plus, la section transversale verticale du fuselage dans le plan YZ prend une forme ovale en augmentant sa dimension horizontale transversale suivant la direction Y, et ce davantage que sur l'aéronef de référence. Cette même section s'écrase moins suivant la direction verticale que dans l'aéronef de référence, la course de la paroi du fuselage au niveau des piquets 18 étant diminuée. Le degré de liberté offert par le pallier suivant la direction Y permet en effet à la section de fuselage de s'ovaliser et donc de modifier son comportement général. Cette ovalisation a pour conséquence principale de retarder l'absorption d'énergie dans la zone basse du fuselage, transformant la hauteur restante du fuselage en une zone d'absorption d'énergie supplémentaire.

Pour ce comportement en cas de crash, il est utile que le palier comporte une zone assurant une absorption d'énergie en se ruinant lorsqu'elle subit une charge dépassant une valeur prédéterminée. Cette valeur est bien supérieure à la charge extrême servant à dimensionner la structure dans le domaine statique. La charge étant dirigée selon l'axe Y, la ruine se fera dans cette direction. En d'autres termes, le palier est agencé pour se ruiner lorsqu'un intensité d'une sollicitation sur le palier suivant une direction longitudinale de la traverse dépasse un seuil prédéterminé, dit dynamique, ce seuil étant supérieur à un seuil, dit statique, prédéterminé en tant que maximum pour cette intensité en circonstances normales d'utilisation de l'aéronef.

Le palier de chacun des modes de réalisation présentés plus haut, notamment celui de la figure 6, peut être configuré pour présenter cette propriété, par exemple en choisissant de façon adaptée le ou les matériaux du palier et/ou ses dimensions. Le matériau sera par exemple un élastomère. Dans ce conteste entre autres, on pourra prévoir que le palier présente des souplesses, par exemple des élasticités, différentes au moins suivant les deux directions Y et Z.

Mais on peut aussi prévoir de modifier l'un quelconque des paliers décrits plus haut pour lui ajouter au moins une partie formant une zone supplémentaire d'absorption d'énergie. Cette partie sera faite par exemple dans un matériau différent de celui ou ceux du reste du palier. Il pourra ici aussi s'agir d'un élastomère. Cette partie forme par exemple un prolongement du palier suivant la direction Y, agencé pour recevoir la charge précitée. Elle pourrait sinon avoir une forme cylindrique analogue à d'autres portions du palier, le cas échéant.

Il est entendu qu'il n'est pas indispensable que la partie du palier destinée à cette ruine en cas de crash soit réalisée dans un matériau élastique. Un matériau présentant une souplesse suivant la direction Y suffira. En effet, c'est une absorption d'énergie qui est recherchée en de telles circonstances, pas le fait que les pièces puissent reprendre ensuite leur configuration d'origine, ce qui est sans objet en cas de crash. Cela étant précisé, l'emploi d'un élastomère demeure envisageable à ce titre.

Bien entendu, on pourra apporter à l'invention de nombreuses modifications sans sortir du cadre de celle-ci.

Le palier pourra comprendre au moins deux matériaux souples différents l'un de l'autre, sans compter un éventuel insert.

On pourrait prévoir que l'insert ou chaque insert s'étend sur un demi-tour ou un quart de tour.

On pourra configurer l'insert ou chaque insert pour que l'élasticité du palier en direction axiale soit différente de son élasticité en direction radiale.

Dans un autre mode de réalisation, on pourra prévoir que le palier de l'invention relie non pas la traverse au cadre, mais la traverse à chacun des piquets 18. On pourra aussi prévoir que la traverse est reliée au cadre à chacune de ses extrémités par un palier selon l'invention et à chacun des piquets par un palier selon l'invention.

On pourra modifier la forme du palier et lui donner une forme autre qu'une forme cylindrique ou une forme annulaire.

## Revendications

1. Aéronef (2) qui comprend :
- au moins une traverse (14) de plancher ;
- au moins un support (12 ; 18) portant la traverse ; et
- au moins un palier (20; 220; 320; 420) reliant la traverse au support, **caractérisé en ce que** le palier comprend au moins un matériau élastomère.

2. Aéronef selon la revendication précédente dans lequel, le matériau élastomère étant un premier matériau, le palier (320; 420) comprend au moins un insert (350; 450a, 450b) en un deuxième matériau interposé entre deux couches du premier matériau, le deuxième matériau étant plus rigide que le premier matériau.

3. Aéronef selon la revendication précédente dans lequel le ou chaque insert (450a, 450b) s'étend sur une partie seulement d'un tour autour d'un axe principal (22) du palier (420).

4. Aéronef selon au moins l'une quelconque des revendications précédentes dans lequel le palier (420) est configuré de sorte qu'il présente des élasticités différentes suivant au moins deux directions (Y, Z) radiales à un axe principal (22) du palier.

5. Aéronef selon au moins l'une quelconque des revendications précédentes dans lequel le palier (20; 220; 320; 420) présente une forme annulaire, notamment cylindrique.

6. Aéronef selon au moins l'une quelconque des revendications précédentes dans lequel le palier (20; 220; 320; 420) présente un axe (22) défini par la forme annulaire, qui s'étend suivant une direction horizontale (X) perpendiculaire à une direction générale de la traverse (14).

7. Aéronef selon au moins l'une quelconque des revendications précédentes qui comprend deux bagues concentriques (24, 26) entre lesquelles est interposé le palier (20; 220; 320; 420) et reliées respectivement à la traverse (14) et au support (12), de préférence l'une (24) des deux bagues formant un logement de réception du palier.

8. Aéronef selon au moins l'une quelconque des revendications précédentes dans lequel le support comprend un cadre (12) relié à la traverse (14) à au moins une extrémité (15) de la traverse, et de préférence à ses deux extrémités.

9. Aéronef selon au moins l'une quelconque des revendications précédentes dans lequel le support comprend au moins un piquet (18) relié à la traverse (14) à distance des extrémités (15) de la traverse.

10. Aéronef selon au moins l'une quelconque des revendications précédentes dans lequel le palier (20; 220; 320; 420) est agencé pour se ruiner lorsqu'une intensité d'une sollicitation sur le palier suivant une direction longitudinale de la traverse dépasse un seuil prédéterminé, dit dynamique, ce seuil étant supérieur à un seuil, dit statique, prédéterminé en tant que maximum pour cette intensité en circonstances normales d'utilisation de l'aéronef.

## Patentansprüche

1. Flugzeug (2), das Folgendes umfasst:
- mindestens eine Bodenstrebe (14);
- mindestens einen Träger (12; 18), der die Strebe trägt; und
- mindestens ein Lager (20; 220; 320; 420), das die Strebe mit dem Träger verbindet,
**dadurch gekennzeichnet, dass** das Lager mindestens ein Elastomermaterial enthält.

2. Flugzeug nach dem vorhergehenden Anspruch, wobei, da das Elastomermaterial ein erstes Material ist, das Lager (320; 420) mindestens einen Einsatz (350; 450a, 450b) aus einem zweiten Material aufweist, das zwischen zwei Schichten aus dem ersten Material angeordnet ist, wobei das zweite Material steifer als das erste Material ist.

3. Flugzeug nach dem vorhergehenden Anspruch, wobei der oder jeder Einsatz (450a, 450b) sich nur auf einem Teil einer Umdrehung um eine Hauptachse (22) des Lagers (420) erstreckt.

4. Flugzeug nach mindestens einem der vorhergehenden Ansprüche, wobei das Lager (420) so ausgebildet ist, dass es gemäß mindestens zwei zu einer Hauptachse (22) des Lagers radialen Richtungen (Y, X) unterschiedliche Elastizitäten aufweist.

5. Flugzeug nach mindestens einem der vorhergehenden Ansprüche, wobei das Lager (20; 220; 320; 420) eine ringförmige, insbesondere zylindrische Form aufweist.

6. Flugzeug nach mindestens einem der vorhergehenden Ansprüche, wobei das Lager (20; 220; 320; 420) eine Achse (22) aufweist, die durch die ringförmige Form gebildet ist und die sich gemäß einer horizontalen Richtung (X) erstreckt, die zu einer allgemeinen Richtung der Strebe (14) lotrecht ist.

7. Flugzeug nach mindestens einem der vorhergehenden Ansprüche, das zwei konzentrische Ringe (24, 26) umfasst, zwischen denen das Lager (20; 220; 320; 420) angeordnet ist und die jeweils mit der Strebe (14) und dem Träger (12) verbunden sind, wobei vorzugsweise der eine (24) der zwei Ringe einen Sitz zur Aufnahme des Lagers bildet.

8. Flugzeug nach mindestens einem der vorhergehenden Ansprüche, wobei der Träger einen Rahmen (12) aufweist, der mit der Strebe (14) an mindestens einem Ende (15) der Strebe, und vorzugsweise an seinen zwei Enden verbunden ist.

9. Flugzeug nach mindestens einem der vorhergehenden Ansprüche, wobei der Träger mindestens einen Pfahl (18) aufweist, der mit der Strebe (14) im Abstand zu den Enden (15) der Strebe verbunden ist.

10. Flugzeug nach mindestens einem der vorhergehenden Ansprüche, wobei das Lager (20; 220; 320; 420) eingerichtet ist, um zerstört zu werden, wenn eine Intensität einer Beanspruchung des Lagers gemäß einer Längsrichtung der Strebe einen vorbestimmten, so genannten dynamischen Schwellwert übersteigt, wobei dieser Schwellwert höher als ein so genannter statischer Schwellwert ist, der unter normalen Benutzungsbedingungen des Flugzeugs als Höchstwert für diese Intensität vorbestimmt ist.

## Claims

1. An aircraft (2) comprising:
· at least one floor cross-member (14);
· at least one support (12; 18) carrying the cross-member; and
· at least one bearing (20; 220; 320; 420) connecting the cross-member to the support;
**characterized in that** the bearing includes at least one elastomer.

2. An aircraft according to the preceding claim, wherein, the elastomer being a first material, the bearing (320; 420) includes at least one insert (350; 450a, 450b) made of a second material interposed between two layers of the first material, the second material being more rigid than the first material.

3. An aircraft according to the preceding claim, wherein the or each insert (450a, 450b) extends over a portion only of a turn around a main axis (22) of the bearing (420).

4. An aircraft according to any preceding claim, wherein the bearing (420) is configured in such a manner as to present different elasticities in at least two directions (Y, Z) that are radial relative to a main axis (22) of the bearing.

5. An aircraft according to any preceding claim, wherein the bearing (20; 220; 320; 420) presents an annular shape, in particular a cylindrical shape.

6. An aircraft according to any preceding claim, wherein the bearing (20; 220; 320; 420) presents an axis (22) defined by the annular shape, which axis extends in a horizontal direction (X) perpendicular to a general direction of the cross-member (14).

7. An aircraft according to any preceding claim having two concentric rings (24, 26) between which the bearing (20; 220; 320; 420) is interposed, the rings being connected respectively to the cross-member (14) and to the support (12), with one of the two rings (24) preferably forming a housing for receiving the bearing.

8. An aircraft according to any preceding claim, wherein the support comprises a frame (12) connected to the cross-member (14) at at least one end (15) of the cross-member, and preferably at both ends.

9. An aircraft according to any preceding claim, wherein the support comprises at least one post (18) connected to the cross-member (14) at a distance from the ends (15) of the cross-member.

10. An aircraft according to any preceding claim, wherein the bearing (20; 220; 320; 420) is arranged to collapse when the intensity of stress on the bearing in a longitudinal direction of the cross-member exceeds a predetermined "dynamic" threshold, said threshold being greater than a "static" threshold predetermined as a maximum for said magnitude under normal circumstances of use of the aircraft.
